# FASCICULE DE BREVET EUROPEEN

(11) **EP 3 867 619 B1**
(45) Date de publication et mention de la délivrance du brevet: **27.11.2024**
(21) Numéro de dépôt: 19817383.3
(22) Date de dépôt: 14.10.2019
(51) Int. Cl.: G01M 15/14, G01D 11/30

(54) **OUTILLAGE ET PROCEDE DE CONTROLE ENDOSCOPIQUE D'UN CARTER A COLLECTEUR D'UNE TURBOMACHINE D'AERONEF**
WERKZEUG UND VERFAHREN ZUR ENDOSKOPISCHEN INSPEKTION EINES VERTEILERGEHÄUSES EINES FLUGZEUGTURBINENMOTORS
TOOL AND METHOD FOR ENDOSCOPIC INSPECTION OF A MANIFOLD CASING OF AN AIRCRAFT TURBINE ENGINE

(30) Priorité: 18.10.2018 FR 1859651
(43) Date de publication de la demande: 25.08.2021
(73) Titulaire: SAFRAN AIRCRAFT ENGINES, 75015 Paris (FR)
(72) Inventeur: POLYDORE, Stéphane, 77550 Moissy-Cramayel (FR)
(74) Mandataire: Gevers & Orès
(86) Numéro de dépôt international: PCT/FR2019/052428
(87) Numéro de publication internationale: WO 2020/079354

(56) Documents cités:
- EP-A1- 2 818 908
- WO-A1-2013/116078
- US-A1- 2017 276 616

## Description

### DOMAINE TECHNIQUE

La présente invention concerne un outillage et un procédé de contrôle endoscopique d'un carter à collecteur d'une turbomachine d'aéronef.

### ETAT DE L'ART

L'état de l'art comprend notamment les documents EP-A1-2 818 908, US-A1-2017/276616 et WO-A1-2013/116078.

Certaines pièces ou modules d'une turbomachine d'aéronef ont une durée de vie qui est estimée en nombre de cycles de fonctionnement et ces pièces ou modules doivent être inspectées régulièrement de façon à vérifier leur état. Une pièce pourra par exemple être inspectée tous les 2000 cycles de fonctionnement et on parle alors d'un pas de réinspection de 2000 cycles.

Une pièce peut être inspectée directement sur le moteur ou après dépose du moteur. Il est clair qu'il est plus avantageux et surtout plus économique d'inspecter une pièce directement sur le moteur et que cette pièce ait un pas de réinspection le plus grand possible. L'inspection d'une pièce interne directement sur un moteur est traditionnellement réalisée par contrôle endoscopique. Les carters ou les équipements du moteur par exemple sont contrôlés par d'autres moyens (US, Courant de Foucault, visuels, etc.).

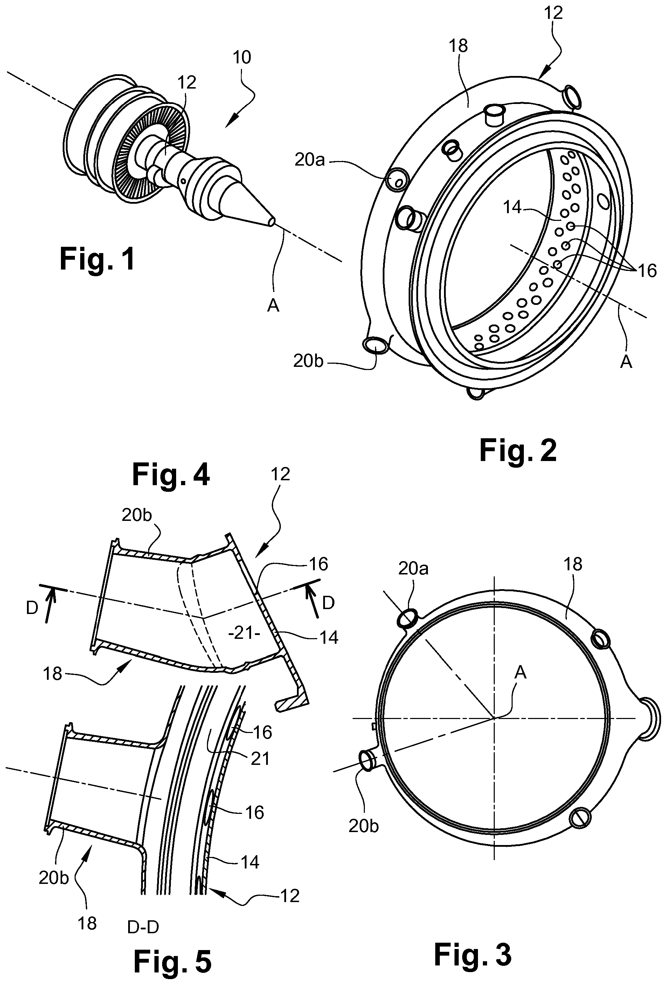

La figure 1 représente une turbomachine 10 d'aéronef et montre la position d'un carter à collecteur 12 représenté à plus grande échelle à la figure 2 et plus en détail aux figures 3 à 5.

Ce carter 12 a une forme générale annulaire et est en général situé entre le compresseur basse pression et le compresseur haute pression de la turbomachine 10. Le carter 12 est utilisé pour le prélèvement d'air comprimé pour son acheminement à d'autres endroits de la turbomachine. Il comprend une paroi annulaire 14 qui comprend des orifices 16 traversants et qui est entourée par un collecteur annulaire 18 comportant des ports 20a, 20b de passage de gaz débouchant dans une cavité annulaire 21 délimitée entre le collecteur 18 et la paroi 14. Les ports 20a, 20b s'étendent en général radialement vers l'extérieur par rapport à l'axe A de révolution de la paroi 14 et du carter 12, et peuvent avoir des orientations inclinées par rapport à des rayons à l'axe A. Les ports 20a, 20b peuvent avoir des formes et dimensions différentes.

Un carter à collecteur 12 de ce type doit être inspecté et ses parties critiques sont notamment les ports 20a, 20b, et en particulier la jonction entre les ports 20a, 20b et le collecteur annulaire 18. Le contrôle endoscopique de ce carter est à favoriser pour éviter une dépose de la turbomachine. Toutefois, il n'existe actuellement pas d'outillage dédié à ce contrôle permettant d'assurer un contrôle optimal et de qualité répétitive.

### EXPOSE DE L'INVENTION

La présente invention apporte une solution au besoin évoqué ci-dessus, qui est simple, efficace et économique.

L'invention propose ainsi un outillage de positionnement pour un moyen de contrôle endoscopique d'un carter à collecteur d'une turbomachine d'aéronef, ce carter à collecteur comportant une paroi annulaire d'axe A de révolution qui comprend des orifices traversants et qui est entourée par un collecteur annulaire comportant au moins un port de passage de gaz débouchant dans une cavité annulaire délimitée entre le collecteur et ladite paroi, caractérisé en ce que l'outillage comprend :
- un centreur configuré pour être engagé dans ledit port et comportant une extrémité distale configurée pour prendre appui sur ladite paroi, et une extrémité proximale configurée pour être maintenue fixement sur une ouverture dudit port, et
- au moins un masque configuré pour être engagé dans ledit port et pour être positionné et fixé sur ledit centreur, ce masque comportant une fenêtre de contrôle endoscopique d'une zone à contrôler à l'intérieur dudit port et/ou de ladite cavité.

Le but de cet outillage est de permettre à un opérateur de localiser avec fiabilité et répétabilité un éventuel défaut lors d'un contrôle endoscopique, afin d'augmenter le pas de réinspection, car en fonction de la taille et de la localisation de ce défaut, le moteur pourra être déposé plus ou moins vite afin d'effectuer une inspection plus poussée lors d'une visite en atelier.

L'outillage selon l'invention peut comprendre une ou plusieurs des caractéristiques et/ou étapes suivantes, prises isolément les unes des autres ou en combinaison les unes avec les autres :
- ledit centreur comprend à son extrémité distale un patin d'appui, de préférence en matériau plastique ou en aluminium,
- ledit centreur comprend à son extrémité proximale un anneau de fixation sur l'ouverture du port,
- le patin et l'anneau sont reliés ensemble par au moins une tige, de préférence coudée,
- l'outillage comprend un collier de fixation de l'anneau sur l'ouverture du port,
- l'anneau comprend au moins une surface d'appui et de positionnement du masque,
- l'anneau comprend une surface cylindrique interne et une surface radiale d'appui et de positionnement du masque,
- l'anneau comprend au moins un pion de guidage configuré pour coopérer avec un trou ou une fente du masque,
- le masque porte des éléments de fixation au centreur,
- le masque comprend une poignée de préhension,
- le masque comprend au moins une surface d'appui sur le centreur,
- le masque comprend une surface cylindrique externe et une surface radiale d'appui sur le centreur,
- le masque est formé par une tôle emboutie et percé de ladite fenêtre ; en variante, le masque est formé par fabrication additive,
- la tôle est pliée à la jonction entre une portion cylindrique et une portion plane, la fenêtre étant située au moins au niveau de cette jonction,
- l'outillage comprend au moins deux, et de préférence trois, masques, qui sont chacun aptes à être engagés successivement dans le port et qui ont des fenêtres de dimensions et/ou positions différentes.

La présente invention concerne encore un procédé de contrôle endoscopique d'un carter à collecteur d'une turbomachine d'aéronef, ce carter à collecteur comportant une paroi annulaire d'axe A de révolution qui comprend des orifices traversants et qui est entourée par un collecteur annulaire comportant au moins un port de passage de gaz débouchant dans une cavité annulaire délimitée entre le collecteur et ladite paroi, caractérisé en ce qu'il est mis en œuvre au moyen d'un outillage tel que décrit ci-dessus et comprend les étapes de :
- engagement du centreur de l'outillage dans ledit port et mise en appui de son extrémité distale sur ladite paroi,
- fixation de l'extrémité proximale du centreur sur l'ouverture du port,
- engagement du masque dans le port et fixation de ce masque sur le centreur, et
- contrôle endoscopique de ladite zone à travers la fenêtre du masque,
le procédé pouvant en outre comprendre les étapes successives, et éventuellement répétées, de :
- démontage et retrait du masque,
- engagement d'un autre masque dans le port et fixation de cet autre masque sur le centreur, et
- contrôle endoscopique de ladite zone à travers la fenêtre de cet autre masque.

La présente invention concerne également un kit comportant l'outillage précité à savoir un centreur et un masque, mais aussi d'autres masques et par exemple deux autres masques, les masques du kit ayant des fenêtres de dimensions et/ou de positions différentes.

La présente invention concerne encore un outillage d'endoscopie, comportant un outillage de positionnement ou un kit tel que décrit dans ce qui précède, et un moyen de contrôle endoscopique.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en perspective d'une turbomachine d'aéronef, vue de l'aval et de côté,
- la figure 2 est une vue schématique en perspective d'un carter à collecteur de la turbomachine de la figure 1,
- la figure 3 est une autre vue schématique en perspective du carter à collecteur, et les figures 4 et 5 sont des vues en coupe de ce carter à collecteur,
- la figure 6 est une vue schématique partielle en perspective d'un carter à collecteur équipé d'un outillage selon l'invention,
- la figure 7 est une vue schématique en perspective d'un centreur de l'outillage de la figure 6,
- la figure 8 est une vue schématique en perspective d'un collier de fixation de l'outillage de la figure 6,
- la figure 9a est une vue schématique en perspective d'un masque de l'outillage de la figure 6,
- les figures 9b et 9c sont des vues similaires à celle de la figure 9a et montrant d'autres masques qui peuvent appartenir au même outillage ou kit, et
- la figure 10 est une vue similaire à celle de la figure 6 et montrant une étape de contrôle endoscopique du carter à collecteur.

### DESCRIPTION DETAILLEE

Les figures 1 à 5 ont été décrites dans ce qui précède.

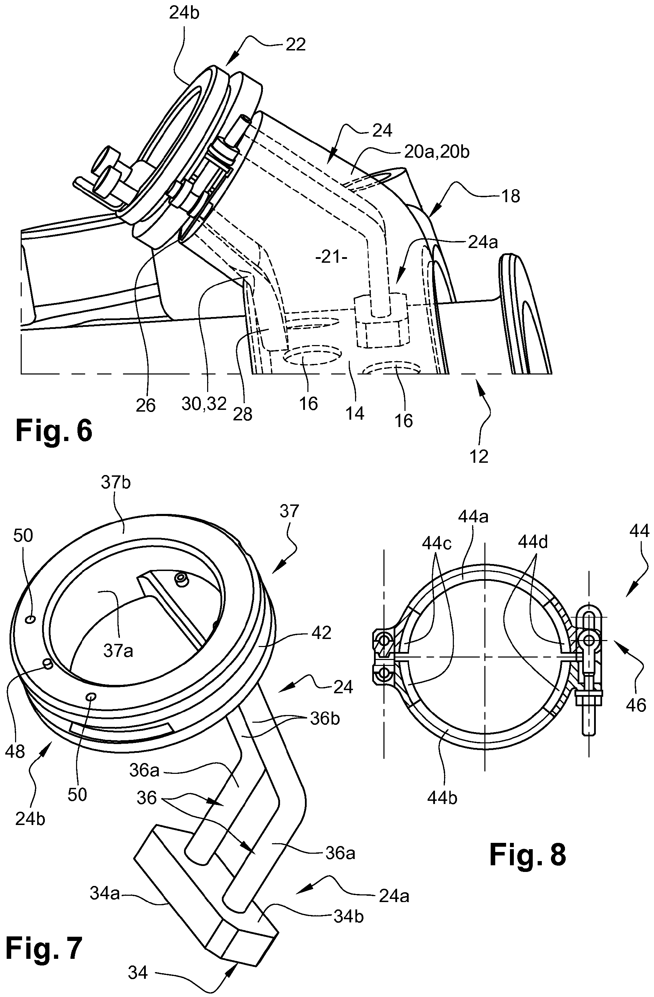

On se réfère donc désormais aux figures 6 à 10 qui représentent un mode de réalisation d'un outillage 22 selon l'invention pour le contrôle endoscopique d'un carter à collecteur 12.

L'outillage 22 comprend :
- un centreur 24 configuré pour être engagé dans le port 20a, 20b à contrôler et comportant une extrémité distale 24a configurée pour prendre appui sur la paroi 14, et une extrémité proximale 24b configurée pour être maintenue fixement sur l'ouverture radialement externe 26 du port 20a, 20b, et
- au moins un masque 28a, 28b, 28c configuré pour être engagé dans le port 20a, 20b et pour être positionné et fixé sur le centreur 24, ce masque comportant une fenêtre 30 de contrôle endoscopique d'une zone 32 à contrôler à l'intérieur du port 20a, 20b et/ou de la cavité 21.

Le centreur 24 est mieux visible à la figure 7. Son extrémité distale 24a comprend un patin 34 d'appui sur la paroi 14. Dans l'exemple représenté, ce patin 34 a une forme générale sensiblement parallélépipédique qui comprend une surface inférieure 34a plane ou légèrement incurvée concave destinée à prendre appui sur la paroi 14 pour faciliter le positionnement du centreur 24 dans le port 20a, 20b. Le patin 34 est de préférence réalisé dans un matériau plastique de façon à ne pas abîmer la paroi 14 et le port 20a, 20b lors du montage du centreur 24, le carter 12 étant en général réalisé en alliage métallique.

Le patin 34 comprend une surface supérieure 34b de liaison du patin à l'extrémité proximale du centreur 24, cette liaison étant ici réalisée par des tiges 36. Les tiges 36 sont ici au nombre de deux bien que ce nombre ne soit pas limitatif. Elles ont une forme générale cylindrique allongée et sont en outre coudées. La forme coudée des tiges 36 permet de suivre la forme et l'orientation du port 20a, 20b qui est incliné par rapport à un rayon à l'axe de révolution de la paroi 14, comme évoqué dans ce qui précède. Ceci afin de permettre le passage plus aisé du moyen de contrôle endoscopique et des masques 28a, 28b, 28c. Chaque tige 36 comprend ainsi deux portions longitudinales et inclinées l'une par rapport à l'autre, une première portion 36a s'étendant depuis le patin 34 et sa surface 34b radialement vers l'extérieur, selon une normale à la paroi 14, et une seconde portion 36b s'étendant entre l'extrémité radialement externe de la portion 36a et l'extrémité proximale 24b du centreur 24. La portion 36a est située dans la cavité 21 et la portion 36b est située dans le port 20a, 20b.

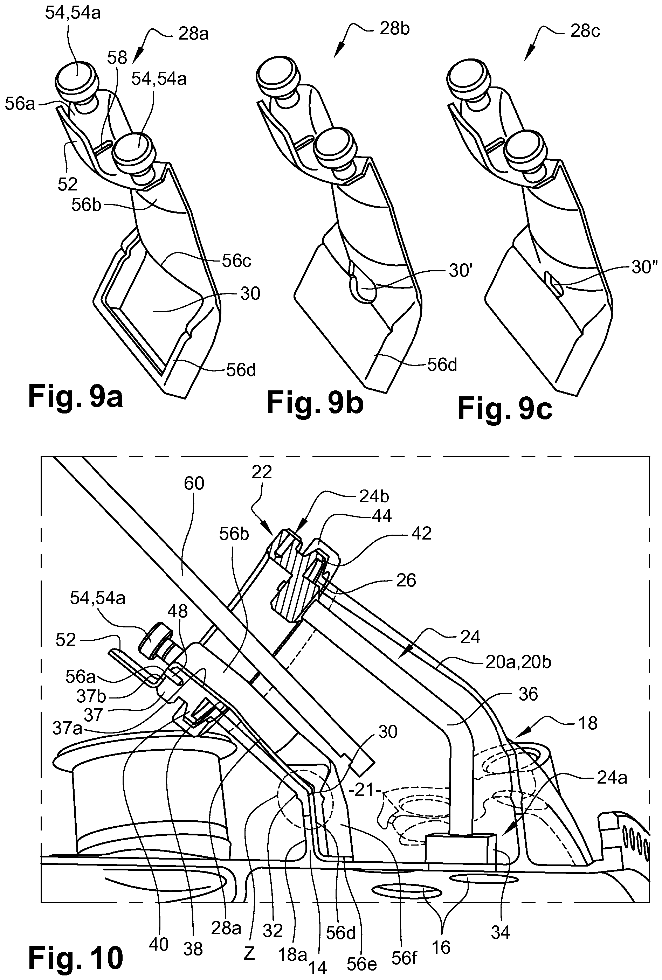

L'extrémité proximale 24b du centreur 24 comprend un anneau 37 de fixation sur l'ouverture 26 du port 20a. Dans l'exemple représenté, l'ouverture 26 a une forme générale annulaire et comprend un rebord périphérique externe 42 d'appui et de fixation de l'anneau 37, comme cela est mieux visible dans la vue en coupe de la figure 10.

Dans l'exemple représenté, l'anneau 37 comprend un rebord cylindrique 38 orienté vers l'extrémité distale 24a et destiné à être engagé par coulissement dans l'ouverture 26 du port 20a, 20b afin de centrer le centreur 24 dans cette ouverture. L'anneau 37 comprend en outre une collerette annulaire externe 40 qui est appliqué sur le rebord périphérique 42 de l'ouverture 26, dans la direction d'engagement du centreur dans le port, et est fixé sur ce rebord par un collier de fixation 44 représenté seul à la figure 8.

Ce collier de fixation 44 est d'un type classique et comprend un cerclage en deux secteurs 44a, 44b qui sont articulés à une de leurs extrémités 44c et qui sont fixés à leurs autres extrémités 44d par un système 46 à vis et écrou. Le collier de serrage 44 est monté autour du rebord 42 et de la collerette 40 et assurent leur serrage dans la direction précitée.

Comme cela est visible à la figure 7, l'anneau 37 comprend une surface cylindrique interne 37a et une surface annulaire radiale 37b située du côté opposé à l'extrémité distale. « radiale » fait ici référence à l'axe de révolution de l'anneau 37. Les surfaces 37a, 37b sont reliées l'une à l'autre et la surface radiale 37b comprend un pion 48 en saillie de guidage du masque 28. La surface 37b comprend en outre des trous taraudés 50, ici au nombre de deux et disposés de part et d'autre du pion 48.

Les figures 9a à 9c montrent des masques 28a, 28b, 28c qui peuvent être utilisés successivement avec le même centreur 24 décrit dans ce qui précède. La description qui suit faite en référence au premier masque 28a de la figure 9a s'applique aux masques 28b, 28c des figures 9b et 9c.

Dans l'exemple représenté, le masque 28a est réalisé par une tôle emboutie et pliée bien que cet aspect ne soit pas limitatif. La tôle peut également être réalisée par fabrication additive. A son extrémité proximale, le masque 28a comprend une patte ou poignée 52 de préhension et de manipulation du masque. A cette même extrémité, le masque comprend en outre des éléments 54 de fixation au centreur 24, qui sont ici au nombre de deux et sont destinés à coopérer avec les trous 50 du centreur. Ces éléments de fixation 54 peuvent être des vis montées de façon imperdable sur le masque 28a, ces vis comportant des têtes 54a accessibles par un opérateur et qui peuvent idéalement être entraînées manuellement par cet opérateur sans outil spécifique.

Ces éléments de fixation 54 sont situés sur une paroi plane 56a du masque 28a qui est destinée à prendre appui sur la surface radiale 37b et qui comprend une fente 58 d'engagement et de coulissement du pion 48, comme cela est visible à la figure 10. Cette paroi plane 56a est reliée à la poignée 52 ainsi qu'à une paroi cylindrique 56b du masque 28a. La paroi cylindrique 56b est destinée à prendre appui sur la surface cylindrique 37a du centreur 24, comme cela est également visible à la figure 10.

L'extrémité distale du masque 28a est conformée pour épouser la forme d'une paroi annulaire 18a du collecteur 18 et est reliée à la paroi cylindrique 56b par une ligne ou pliure 56c du masque 28a. Le mot ligne ou pliure couvre aussi le cas où le masque n'est pas obtenu par emboutissage. Cette pliure 56c est destinée à être située à l'extrémité radialement interne du port 20a, 20b, à sa jonction avec le collecteur 18.

Les figure 9a et 10 montre que l'extrémité distale du masque comprend une paroi 56d sensiblement plane qui est destinée à être plaquée contre la paroi annulaire 18a. Cette paroi 56d est reliée à un rebord inférieur 56e qui est lui destiné à être plaqué contre la paroi 14. En pratique, un léger jeu peut exister afin de reprendre la plage de tolérance de fabrication. La paroi 56d est en outre reliée à des rebords latéraux 56f de rigidification.

La zone critique du carter 12 et en particulier du collecteur 18 est située au niveau de ses ports 20a, 20b et en particulier de leur jonction au reste du collecteur. Cette zone Z est désignée à la figure 10 par un cercle en traits pointillés. C'est en effet dans cette zone Z que des criques ou fissures sont susceptibles d'apparaître, pouvant réduire la durée de vie du carter 12.

Le masque 28a comprend donc une fenêtre 30 de contrôle endoscopique de cette zone Z. Autrement dit, un moyen de contrôle endoscopique, tel qu'un endoscope 60, est engagé par un opérateur à l'intérieur du port 20a, 20b, en passant à travers l'anneau 37 de façon à ce que l'extrémité distale de l'endoscope soit située au niveau de la fenêtre 30. L'endoscope 60 peut être utilisé pour effectuer des opérations de ressuage dans la zone Z et comprend un système optique de visualisation de cette zone Z.

Le masque 28a est d'abord engagé dans le port 20a, 20b en passant à travers l'anneau 37. Sa paroi 56a est appliquée sur la surface radiale 37b de l'anneau 37. Pour cela, le pion 48 du centreur doit être engagé dans la fente 58 du centreur. Le masque est ensuite déplacé sur la surface 37b de sorte que le pion 48 soit engagé dans une extrémité longitudinale de la fente 58. Ceci permet à la paroi 56b du masque de venir en appui sur la surface 37a du centreur. Dans cette position, le masque est dans sa position définitive et sa paroi 56d et son rebord 56e devraient être correctement positionnés dans la cavité 21. Le masque peut alors être immobilisé dans cette position par vissage des éléments 54 dans les trous 50 du centreur 24.

L'invention propose d'associer plusieurs masques 28a, 28b, 28c à un même centreur 24, pour former ainsi un kit qui peut être stocké dans une valise de transport. Le centreur 24 est alors universel et permet de définir une même position de référence pour les masques. Chaque masque est choisi en fonction de la zone à contrôler ou de l'état d'avancement du contrôle. Dans l'exemple représenté, les trois masques sont utilisés successivement lors d'une même opération de contrôle.

Le premier masque 28a de la figure 9a est utilisé en premier et a une grande fenêtre 30 qui s'étend sensiblement sur toute l'étendue de la paroi 56d, entre le rebord 56e et la pliure 56c, ainsi qu'entre les rebords 56f. Cette fenêtre 30 peut être utilisée pour projeter sur la zone Z des produits de ressuage au moyen de l'endoscope 60.

Le masque 28b de la figure 9b est utilisé en second, après démontage et retrait du masque 28a, et comprend une fenêtre 30' de taille inférieure, localisée au niveau de la pliure 56c.

Le masque 28c de la figure 9c est utilisé en dernier, après démontage et retrait du masque 28b, et comprend une fenêtre 30" de taille encore plus petite, localisée au niveau de la pliure 56c.

Les fenêtres 30', 30" sont utilisées pour visualiser la zone au moyen de l'endoscope 60. La fenêtre 30' peut permettre de localiser une zone intermédiaire de localisation de défauts éventuels, et la fenêtre 30" peut permettre de localiser une zone critique de localisation de ces défauts.

Chaque outillage ou kit peut être spécifique à l'inspection d'un port puisque les ports 20a, 20b peuvent différer l'un de l'autre par leurs formes et dimensions. L'inspection des ports 20a, 20b nécessiterait alors deux kits comportant chacun un centreur et au moins trois masques ou alors un seul kit comportant un premier centreur et au moins trois masques, et un second centreur et au moins trois autres masques.

## Revendications

1. Outillage (22) de positionnement pour un moyen de contrôle endoscopique d'un carter à collecteur (12) d'une turbomachine (10) d'aéronef, ce carter à collecteur comportant une paroi annulaire (14) d'axe A de révolution qui comprend des orifices (16) traversants et qui est entourée par un collecteur annulaire (18) comportant au moins un port (20a, 20b) de passage de gaz débouchant dans une cavité annulaire (21) délimitée entre le collecteur et ladite paroi, l'outillage comprenant
- un centreur (24) configuré pour être engagé dans ledit port et comportant une extrémité distale (24a) configurée pour prendre appui sur ladite paroi, et une extrémité proximale (24b) configurée pour être maintenue fixement sur une ouverture (26) dudit port, et
- au moins un masque (28a, 28b, 28c) configuré pour être engagé dans ledit port et pour être positionné et fixé sur ledit centreur, ce masque comportant une fenêtre (30, 30', 30") de contrôle endoscopique d'une zone (Z) à contrôler à l'intérieur dudit port et/ou de ladite cavité,
**caractérisé en ce que** ledit centreur (24) comprend à son extrémité distale un patin d'appui (34).

2. Outillage (22) selon la revendication 1, dans lequel ledit centreur (24) comprend à son extrémité proximale un anneau (37) de fixation sur l'ouverture (26) du port (20a, 20b).

3. Outillage (22) selon la revendication 2, dans lequel le patin (34) et l'anneau (37) sont reliés ensemble par au moins une tige (36), de préférence coudée.

4. Outillage (22) selon la revendication 2 ou 3, dans lequel l'anneau (37) comprend au moins une surface (37a, 37b) d'appui et de positionnement du masque (28a, 28b, 28c).

5. Outillage (22) selon l'une des revendications 2 à 4, dans lequel l'anneau (37) comprend au moins un pion (48) de guidage configuré pour coopérer avec un trou ou une fente (30) du masque (28a, 28b, 28c).

6. Outillage (22) selon la revendication 5, dans lequel l'anneau (37) comprend une surface cylindrique interne (37a) et une surface radiale (37b) d'appui et de positionnement du masque (28a, 28b, 28c).

7. Outillage (22) selon l'une des revendications 1 à 5, dans lequel le masque (28a, 28b, 28c) porte des éléments (54) de fixation au centreur (24).

8. Outillage (22) selon l'une des revendications 1 à 7, dans lequel il comprend au moins deux, et de préférence trois, masques (28a, 28b, 28c), qui sont chacun aptes à être engagés successivement dans le port (20a, 20b) et qui ont des fenêtres (30, 30', 30") de dimensions et/ou positions différentes.

9. Procédé de contrôle endoscopique d'un carter à collecteur (12) d'une turbomachine (10) d'aéronef, ce carter à collecteur comportant une paroi annulaire (14) d'axe A de révolution qui comprend des orifices (16) traversants et qui est entourée par un collecteur annulaire (18) comportant au moins un port (20a, 20b) de passage de gaz débouchant dans une cavité annulaire (21) délimitée entre le collecteur et ladite paroi, **caractérisé en ce qu'**il est mis en œuvre au moyen d'un outillage (22) selon l'une des revendications précédentes et comprend les étapes de :
- engagement du centreur (24) de l'outillage dans ledit port et mise en appui de son extrémité distale (24a) sur ladite paroi,
- fixation de l'extrémité proximale (24b) du centreur sur l'ouverture (26) du port,
- engagement du masque (28a) dans le port et fixation de ce masque sur le centreur, et
- contrôle endoscopique de ladite zone (Z) à travers la fenêtre (30) du masque,
le procédé pouvant en outre comprendre les étapes successives, et éventuellement répétées, de :
- démontage et retrait du masque (28a),
- engagement d'un autre masque (28b, 28c) dans le port et fixation de cet autre masque sur le centreur, et
- contrôle endoscopique de ladite zone à travers la fenêtre (30', 30") de cet autre masque.

## Patentansprüche

1. Werkzeug (22) zur Positionierung für ein Mittel zur endoskopischen Inspektion eines Verteilergehäuses (12) eines Turbotriebwerks (10) eines Luftfahrzeugs, wobei dieses Verteilergehäuse eine ringförmige Wand (14) mit einer Rotationsachse A umfasst, die durchgehende Bohrungen (16) umfasst und die von einem ringförmigen Verteiler (18) umgeben ist, der mindestens einen Anschluss (20a, 20b) zum Durchgang von Gas umfasst, der in einem ringförmigen Hohlraum (21) mündet, der zwischen dem Verteiler und der Wand abgegrenzt ist, wobei das Werkzeug folgendes umfasst:
- eine Zentriervorrichtung (24), die konfiguriert ist, um mit dem Anschluss in Eingriff gebracht zu werden und ein distales Ende (24a), das konfiguriert ist, um an der Wand anzuliegen, und ein proximales Ende (24b) umfasst, das konfiguriert ist, um fest auf einer Öffnung (26) des Anschlusses gehalten zu werden, und
- mindestens eine Maske (28a, 28b, 28c), die konfiguriert ist, um in dem Anschluss in Eingriff gebracht zu werden und um auf der Zentriervorrichtung positioniert und befestigt zu werden, wobei die Maske ein Fenster (30, 30', 30") zur endoskopischen Inspektion im Inneren des Anschlusses und/oder des Hohlraums umfasst, **dadurch gekennzeichnet, dass** die Zentriervorrichtung (24) an seinem distalen Ende einen Gleitschuh (34) umfasst.

2. Werkzeug (22) nach Anspruch 1, wobei die Zentriervorrichtung (24) an ihrem proximalen Ende einen Ring (37) zur Befestigung auf der Öffnung (26) des Anschlusses (20a, 20b) umfasst.

3. Werkzeug (22) nach Anspruch 2, wobei der Schuh (34) und der Ring (37) durch mindestens eine vorzugsweise gewinkelte Welle (36) miteinander verbunden sind.

4. Werkzeug (22) nach Anspruch 2 oder 3, wobei der Ring (37) mindestens eine Oberfläche (37a, 37b) zum Anlegen und zur Positionierung der Maske (28a, 28b, 28c) umfasst.

5. Werkzeug (22) nach einem der Ansprüche 2 bis 4, wobei der Ring (37) mindestens einen Führungsstift (48) umfasst, der konfiguriert ist, um mit einem Loch oder einem Schlitz (30) der Maske (28a, 28b, 28c) zusammenzuwirken.

6. Werkzeug (22) nach Anspruch 5, wobei der Ring (37) mindestens eine interne zylindrische Oberfläche (37a) und eine radiale Oberfläche (37b) zum Anlegen und zur Positionierung der Maske (28a, 28b, 28c) umfasst.

7. Werkzeug (22) nach einem der Ansprüche 1 bis 5, wobei die Maske (28a, 28b, 28c) Elemente (54) zur Befestigung an der Zentriervorrichtung (24) trägt.

8. Werkzeug (22) nach einem der Ansprüche 1 bis 7, wobei es mindestens zwei, vorzugsweise drei Masken (28a, 28b, 28c) umfasst, die jeweils in der Lage sind, nacheinander in dem Anschluss (20a, 20b) in Eingriff gebracht zu werden und die Fenster (30, 30', 30") mit unterschiedlichen Abmessungen und/oder Positionen aufweisen.

9. Verfahren zur endoskopischen Inspektion eines Verteilergehäuses (12) eines Turbotriebwerks (10) eines Luftfahrzeugs, wobei dieses Verteilergehäuse eine ringförmige Wand (14) mit einer Rotationsachse A umfasst, die durchgehende Bohrungen (16) umfasst und die von einem ringförmigen Verteiler (18) umgeben ist, der mindestens einen Anschluss (20a, 20b) zum Durchgang von Gas umfasst, der in einem ringförmigen Hohlraum (21) mündet, der zwischen dem Verteiler und der Wand abgegrenzt ist, **dadurch gekennzeichnet, dass** es mittels eines Werkzeugs (22) nach einem der vorstehenden Ansprüche implementiert wird und die folgenden Schritte umfasst:
- In-Eingriff-Bringen der Zentriervorrichtung (24) des Werkzeugs in dem Anschluss und Anlegen seines distalen Endes (24a) an die Wand,
- Befestigung des proximalen Endes (24b) der Zentriervorrichtung auf der Öffnung (26) des Anschlusses,
- In-Eingriff-Bringen der Maske (28a) in dem Anschluss und Befestigung dieser Maske auf der Zentriervorrichtung, und
- endoskopische Inspektion der Zone (Z) durch das Fenster(30) der Maske hindurch,
wobei das Verfahren des Weiteren die nachfolgenden und möglicherweise wiederholten Schritte umfasst:
- Zerlegung und Entnahme der Maske (28a),
- In-Eingriff-Bringen einer anderen Maske (28b, 28c) in dem Anschluss und Befestigung dieser anderen Maske auf der Zentriervorrichtung, und
- endoskopische Inspektion der Zone durch das Fenster (30', 30") dieser anderen Maske hindurch.

## Claims

1. A positioning tool (22) for an endoscopic inspection means for inspecting a manifold casing (12) of an aircraft turbine engine (10), this manifold casing comprising an annular wall (14) with an axis A of revolution which comprises through orifices (16) and which is surrounded by an annular manifold (18) comprising at least one gas passage port (20a, 20b) opening into an annular cavity (21) delimited between the manifold and said wall, the tool comprising :
- a centring device (24) configured to be engaged in said port and comprising a distal end (24a) configured to bear against said wall, and a proximal end (24b) configured to be held securely on an opening (26) of said port, and
- at least one mask (28a, 28b, 28c) configured to be engaged in said port and to be positioned and fastened on said centring device, this mask comprising a window (30, 30', 30") for endoscopic inspection of a zone (Z) to be inspected inside said port and/or said cavity,
**characterized in that** said centring device (24) comprises at his distal end a bearing pad (34).

2. The tool (22) according to claim 1, wherein said centring device (24) comprises at its proximal end ring (37) for fastening to the opening (26) of the port (20a, 20b).

3. The tool (22) according to claim 2, wherein the pad (34) and the ring (37) are connected together by at least one rod (36), preferably bent.

4. The tool (22) according to claim 2 or 3, wherein the ring (37) comprises at least one surface (37a, 37b) for bearing against and positioning the mask (28a, 28b, 28c).

5. The tool (22) according to any of claims 2 to 4, wherein the ring (37) comprises at least one guide pin (48) configured to cooperate with a hole or a slot (30) of the mask (28a, 28b, 28c).

6. The tool (22) according to claim 5, wherein the ring (37) comprises an internal cylindrical surface (37a) and a radial surface (37b) for bearing against and positioning the mask (28a, 28b, 28c).

7. The tool (22) according to any of claims 1 to 5, wherein the mask (28a, 28b, 28c) carries elements (54) for fastening to the centring device (24).

8. The tool (22) according to any one of claims 1 to 7, wherein it comprises at least two, and preferably three, masks (28a, 28b, 28c), each of which is capable of being successively engaged in the port (20a, 20b) and which have windows (30, 30', 30") of different dimensions and/or positions.

9. A method of endoscopic inspection of a manifold casing (12) of an aircraft turbine engine (10), this manifold casing comprising an annular wall (14) of axis A of revolution which comprises through orifices (16) and which is surrounded by an annular manifold (18) comprising at least one port (20a, 20b) for the gas passage opening into an annular cavity (21) delimited between the manifold and said wall, **characterised in that** it is implemented by means of a tool (22) according to one of the preceding claims and comprises the steps of :
- engaging the centring device (24) of the tool in said port and bringing its distal end (24a) to bear against said wall,
- fastening the proximal end (24b) of the centring device to the opening (26) of the port,
- engaging the mask (28a) in the port and fastening this mask to the centring device, and
- endoscopically inspecting said zone (Z) through the window (30) of the mask,
the method may further comprise the successive and possibly repeated steps of :
- disassembling and removing the mask (28a)
- engaging another mask (28b, 28c) in the port and fastening that other mask to the centring device, and
- endoscopically inspecting said zone through the window (30', 30") of said other mask.
